# EUROPÄISCHE PATENTSCHRIFT

(11) **EP 3 088 974 B1**
(45) Veröffentlichungstag und Bekanntmachung des Hinweises auf die Patenterteilung: **19.08.2020**
(21) Anmeldenummer: 16164802.7
(22) Anmeldetag: 12.04.2016
(51) Int. Cl.: G05B 19/042, H04L 12/40

(54) **VERFAHREN ZUM EFFEKTIVEN ÜBERTRAGEN VON DATEN AUF EIN BUSGERÄT EINER BUSORIENTIERTEN PROGRAMMIERBAREN ELEKTROINSTALLATION**
METHOD FOR EFFECTIVE TRANSMISSION OF DATA ON A BUS DEVICE OF A BUS-ORIENTED PROGRAMMABLE ELECTRIC INSTALLATION
PROCEDE DE TRANSMISSION EFFECTIVE DE DONNEES DANS UN APPAREIL DE BUS D'UNE INSTALLATION ELECTRONIQUE PROGRAMMABLE ORIENTEE BUS

(30) Priorität: 28.04.2015 DE 102015207731
(43) Veröffentlichungstag der Anmeldung: 02.11.2016
(73) Patentinhaber: Siemens Schweiz AG, 8047 Zürich (CH)
(72) Erfinder: HOCH, Peter, 93080 Pentling (DE)
(74) Vertreter: Maier, Daniel Oliver

(56) Entgegenhaltungen:
- DE-A1-102012 111 735
- DE-T2- 60 018 209
- US-A1- 2014 156 710

## Beschreibung

Die Erfindung betrifft ein Verfahren zum Übertragen von Daten auf ein Busgerät einer busorientierten programmierbaren Elektroinstallation, sowie ein entsprechendes Computerprogramm. Weiterhin betrifft die Erfindung ein Busgerät einer busorientierten programmierbaren Elektroinstallation, geeignet zum Empfangen von Daten gemäss des Verfahrens. Ferner betrifft die Erfindung ein computerlesbares Medium, das auf einem Computer ausführbare Befehle aufweist zur Übertragung von Daten auf ein Busgerät einer busorientierten programmierbaren Elektroinstallation.

Um in modernen Gebäuden bzw. Häusern eine einfache und komfortable Bedienung der verschiedenen Komponenten zu ermöglichen, können diese über einen Installationsbus angesteuert werden. Ein solcher Installationsbus ist beispielsweise der europäische Installationsbus (EIB), der in dem KNX-Standard beschrieben ist.

Eine Gebäudeinstallationseinrichtung ermöglicht es, einzelne Gebäudeinstallationen, wie beispielsweise eine Lampe oder einen Heizkörper, individuell gemäß einem vorgegebenen Betriebsplan zu steuern, indem an jeder Gebäudeinstallation ein Busgerät bereitgestellt wird, welches die jeweilige Gebäudeinstallation steuert, also beispielsweise automatisch eine Lampe an- und ausschaltet oder einen Thermostat eines Heizkörpers einstellt. Die Busgeräte können dabei untereinander und auch mit einem zentralen Konfigurationsgerät über einen Gebäudeinstallationsbus verbunden sein, so dass die Geräte gegenseitig Daten austauschen können und die Busgeräte zentral über das Konfigurationsgerät konfiguriert oder rekonfiguriert werden können. Die unter den Busgeräten (Busteilnehmern) ausgetauschten Daten können beispielsweise Sensordaten oder Steuerdaten sein.

Das zugrundliegende Bussystem basiert darauf, dass jeder Busteilnehmer über einen eigenen Mikroprozessor verfügt und somit selbständig und unabhängig von einem zentralen Prozessor seine Daten verwaltet. Jedem Busteilnehmer ist hierzu ein Applikationsprogramm mit Kommunikationsobjekten und Parametern zugeordnet. Bei der Inbetriebsetzung eines derartigen Bussystems müssen die Kommunikationsbeziehungen der Busteilnehmer projektiert werden. Im Falle des EIB bzw. KNX-Systems kommt hierbei häufig die Engineering-Tool-Software (ETS) zum Einsatz. Hierbei handelt es sich um eine Software, die auf einem PC bzw. Laptop lauffähig ist und mit dem Bus verbunden wird. Einige mögliche Arten der Verbindungen sind RS232, USB, Funk oder Ethernet. Bei der ETS handelt es sich um ein datenbankbasiertes graphisches Werkzeug zur Projektierung einer busorientierten programmierbaren Elektroinstallation. In der ETS-Datenbank sind die Projektierungsdaten für jeden einzelnen Busteilnehmer bzw. jedes einzelne Applikationsprogramm getrennt voneinander gespeichert.

Das Schutzrecht DE60018209T2 offenbart ein Verfahren zum Umprogrammieren einer Feldeinrichtung in einem Prozeßsteuerungsnetz, das eine Vielzahl von Einrichtungen hat, die mit einem Bus kommunikativ gekoppelt sind und die ein Standard-Kommunikationsprotokoll verwenden, um Prozeßsteuerungsfunktionen auszuführen Weiterhin offenbart DE60018209T2 ein entsprechendes umkonfigurierbares Feldgerät.

Die deutsche Patentanmeldung DE102012111735A1 offenbart ein Verfahren zum Betreiben eines Feldgerätes, wobei das Feldgerät an einen Feldbus angeschlossen ist und über den Feldbus mit einer übergeordneten Einheit verbunden ist, wobei zumindest zeitweise von einer an das Feldgerät angeschlossenen oder lösbar verbundenen Datenübertragungseinheit Daten über das Feldgerät und über den Feldbus an die übergeordnete Einheit übertragen werden.

Die amerikanische Patentanmeldung US20140156710A1 offenbart ein industrielles Automationssystem mit einer Updating-Komponente, die über ein Netzwerk mit Automatisierungsgeräten gekoppelt ist. Mit der Updating-Komponente erfolgt u.a. ein Update der Konfigurationsdaten der Automatisierungsgeräte. Insbesondere beim einem Update von Applikationen (bzw. von Applikationsprogrammen) oder bei einer Neuinstallation einer Betriebssoftware (sogenanntes Firmware-Update) müssen grosse Datenmengen auf ein Busgerät geladen (Upload) werden. Wenn dieser Upload durch einen Reset oder Netzausfall unterbrochen wird, kann es vorkommen, dass noch nicht alle übertragenen Daten im Flash-Speicher des Busgerätes persistiert wurden und somit verloren gehen. Dies erfordert einen zeitaufwendigen neuen Upload der Daten.

Es ist daher die Aufgabe der vorliegenden Erfindung ein effektives Verfahren zur Übertragung von, insbesondere grossen, Datensätzen auf ein Busgerät einer busorientierten programmierbaren Elektroinstallation bereitzustellen.

Die Aufgabe wird gelöst durch ein Verfahren zum Übertragen von Daten auf ein Busgerät einer busorientierten programmierbaren Elektroinstallation, nach Anspruch 1. Der erste Speicher entspricht prinzipiell einem Puffer- bzw. Cache-Speicher, geeignet zur Zwischenspeicherung (Buffering) von empfangenen Daten. Mit Vorteil handelt es sich beim ersten Speicher um einen RAM-Speicher (Random Access Memory) und beim zweiten Speicher um einen Flash-Speicher. Als zweiter Speicher kann aber jeglicher Speichertyp geeignet zur persistenten Speicherung von Daten verwendet werden. Das Busgerät (Busteilnehmer) kann die Datenmenge (z.B. eine Applikation) über die Busschnittstelle oder über eine Schnittstelle (z.B. USB-Schnittstelle zu einem externen Gerät (z.B. Konfigurationsgerät). Das Verfahren ermöglicht eine zuverlässige und effektive Übertragung von insbesondere grossen Datenmengen auf das Busgerät zu einer persistenten Speicherung.

Mit Vorteil ist die Speicherverwaltungseinheit ein Teil der Steuereinheit oder steht mit dieser in Verbindung. Mit Vorteil verwaltet die Speicherverwaltungseinheit eine Tabelle zur Belegung der Speicherbereiche (Kacheln) des zweiten Speichers. Mit Vorteil verwaltet die Speicherverwaltungseinheit die vom ersten Speicher erhaltenen und in den zweiten Speicher geschriebenen Portionen einer Datenmenge (z.B. für eine Applikation oder ein Betriebssystem). Dadurch ist insbesondere sichergestellt, dass bei einem Verbindungsabbruch bei der Übertragung der Datenmenge nur diejenigen Portionen der Datenmenge nur diejenigen, noch nicht in den zweiten Speicher geschriebenen Portionen einer Datenmenge, neu übertragen werden müssen, und nicht die vollständige Datenmenge neu übertragen werden muss.

Eine weitere vorteilhafte Ausgestaltung der Erfindung liegt darin, dass vor dem Übertragen der Datenmenge durch ein Konfigurationsgerät (z.B. Upload-Tool, ETS) eine im Busgerät befindliche Statusinformation zum Erkennen eines vorliegenden Resets abgefragt wird. Dadurch kann bei einem Verbindungsabbruch unterschieden werden, ob es sich um ein Kommunikationsproblem handelt oder ob das Gerät zurückgesetzt (Reset erfolgte) wurde. Das Konfigurationsgerät (Upload-Tool, ETS) kann diese Statusinformation setzen und nach einem Verbindungsabbruch auswerten. Durch diese Maßnahme kann festgestellt werden ob es sich um einen Verbindungsabbruch oder um einen Reset handelt. Bei einem normalen Verbindungsabbruch muss nur die Verbindung neu aufgebaut werden und das letzte (abgebrochene) Datentelegramm (d.h. die abgebrochenen Portion der Datenmenge) neu gesendet werden, zuzüglich etwaiger noch nicht übertragenen Portionen der Datenmenge.

Eine weitere vorteilhafte Ausgestaltung der Erfindung liegt darin, dass es sich bei den zu übertragenden Daten um Applikationen oder um Betriebssoftware (Firmware) für das Busgerät handelt. Applikationen bestimmen den Funktionsumfang eines Busgerätes und können genauso wie die Betriebssoftware (Firmware) sehr umfangreiche Datensätze umfassen. Die Firmware entspricht dabei einem Betriebssystem für ein Busgerät mit Kommunikationsstack etc. Hierdurch kann z.B. in vorteilhafter Weise ein Firmware-Update zuverlässig über den Gebäudeinstallationsbus oder eine externe Schnittstelle (z.B. USB-Schnittstelle) an das Busgerät übertragen werden.

Die Aufgabe wird weiterhin gelöst durch ein Computerprogramm zur Übertragung von Daten, insbesondere Applikationen, auf ein Busgerät einer busorientierten programmierbaren Elektroinstallation mit Instruktionen zur Ausführung des erfindungsgemässen Verfahrens. Dadurch kann ein Applikations-Update oder ein Betriebssystem-Update (Firmware-Update) computerunterstützt und effektiv erfolgen, z.B. durch einen Personal Computer (PC), insbesondere durch einen Endkunden im Feld. Die Aufgabe wird weiterhin gelöst durch ein computerlesbares Medium, das auf einem Computer ausführbare Befehle aufweist zur Übertragung von Daten, insbesondere Applikationen, gemäss des erfindungsgemässen Verfahrens für ein Busgerät einer busorientierten programmierbaren Elektroinstallation. Dadurch kann das Computerprogramm zur Durchführung eines Applikations-Updates oder Betriebssystem-Updates (Firmware-Update) sehr leicht auf einem Computer (insbesondere bei einem Endkunden im Feld) implementiert bzw. installiert werden.

Die Aufgabe wird weiterhin gelöst durch ein Busgerät einer busorientierten programmierbaren Elektroinstallation, nach Anspruch 6. Ein so ausgestaltetes Busgerät (Busteilnehmer) ermöglicht insbesondere eine zuverlässige und effektive Übertragung von insbesondere grossen Datenmengen auf das Busgerät zu einer persistenten Speicherung. Bei den Datenmengen kann es sich um eine Applikation für das Busgerät handeln, mit Applikationsprogramm und dazugehörigen Projektierungsdaten. Es kann sich aber auch um Betriebssystemsoftware bzw. Firmware handeln. Mit Vorteil orientiert sich die Anzahl und Größe der Kacheln am Microcomputer und der Anzahl und Größe der Flashpages. Dadurch, dass die Grösse der Speicherbereiche (d.h. der Kacheln) an die zugrundliegende Hardware des Busgerätes, d.h. insbesondere des Mikrokontrollers und des Flashspeichers angepasst ist, kann die Übertragung der Daten effizient erfolgen. Mit Vorteil entspricht die Grösse eines Speicherbereiches der Kachelgrösse des verwendeten Flash-Speichers.

Mit Vorteil ist die Speicherverwaltungseinheit Teil der Steuereinheit (Controller) des Busgerätes. Mit Vorteil verwaltet die Speicherverwaltungseinheit eine Tabelle mit der Speicherbelegung, d.h. den beschriebenen Kacheln. Damit kann effektiv festgestellt werden, wie viele und welche Portionen einer auf das Busgerät zu übertragenden Datenmenge bereits in den Speicher persistent geschrieben wurde.

Eine weitere vorteilhafte Ausgestaltung der Erfindung liegt darin, dass das Busgerät eine Statusinformation in einem geeigneten Speichermedium umfasst, zum Erkennen eines Resets. Die Statusinformation kann z.B. in einem Register der Steuereinheit oder in einem Speicherbereich des Busgerätes hinterlegt sein, z.B. in Form eines Statusbits. Durch Ablegen der Statusinformation im Busgerät, die bei einem Reset zurückgesetzt wird, kann ein Reset des Busgeräts zuverlässig erkannt werden. Ein Uploadtool (Konfigurationsgerät, z.B. ETS) kann diese Statusinformation setzen und nach einem Verbindungsabbruch auswerten.

Eine weitere vorteilhafte Ausgestaltung der Erfindung liegt darin, dass die Datenschnittstelle dazu ausgebildet ist, die portionierte Datenmenge von einem Konfigurationsgerät (Upload-Tool, ETS) zu erhalten. Bei der Datenschnittstelle kann es sich z.B. um eine USB- oder eine IP-Schnittstelle (für den Datenempfang über IP-Protokolle) handeln.

Die Erfindung sowie vorteilhafte Ausführungen der vorliegenden Erfindung werden am Beispiel der nachfolgenden Figuren erläutert. Dabei zeigen:
- FIG 1: ein beispielhaftes Busgerät einer busorientierten programmierbaren Elektroinstallation, geeignet zur Durchführung der vorliegenden Erfindung, und
- FIG 2: ein beispielhaftes Ablaufdiagramm für ein Verfahren zum Übertragen von Daten auf ein Busgerät einer busorientierten programmierbaren Elektroinstallation.

Gebäudeinstallationen, insbesondere Elektroinstallationen zur Steuerung von Lichtquellen, Jalousien, Ventilatoren, Heizungen, Alarmanlagen etc. werden häufig unter Verwendung von standardisierter Bustechnik realisiert, z.B. mit einem KNX-Bussystem. Mit einem KNX-Bussystem werden in einem Gebäude Bedienelemente (Sensoren) und entsprechende Aktoren miteinander verbunden und angesteuert. Jeder Teilnehmer (Busgerät) eines solchen Bussystems verfügt über einen eigenen Mikroprozessor und kann somit selbständig und unabhängig von einem zentralen Prozessor seine Daten verwaltet. Jedem Busteilnehmer wird hierzu ein Applikationsprogramm mit entsprechenden Kommunikationsobjekten und Parametern zugeordnet. Bei der Inbetriebnahme eines KNX-Bussystems (oder einem ähnlichen System) müssen die Kommunikationsbeziehungen und Parameter der Busteilnehmer projektiert werden. Für die Projektierung von KNX-Bussystemen wird üblicherweise die Engineering-Tool-Software (ETS) verwendet. Bei der ETS handelt es sich um ein datenbankbasiertes grafisches Werkzeug zur Projektierung von busorientierten programmierbaren Elektroinstallationen. Unter Verwendung einer Datenbank werden in der ETS die Projektierungsdaten, d. h. die Kommunikationsbeziehungen und die Geräteparameter, für jeden Busteilnehmer bzw. jedes Applikationsprogramm separat erstellt und abschließend über eine Schnittstelle (z.B. USB-Datenschnittstelle) in das Bussystem und deren Teilnehmer übertragen bzw. eingespeist.

Eine Gebäudeinstallationseinrichtung ermöglicht es, einzelne Gebäudeinstallationen, wie beispielsweise eine Lampe oder einen Heizkörper, individuell gemäß einem vorgegebenen Betriebsplan zu steuern, indem an jeder Gebäudeinstallation ein Busgerät bereitgestellt wird, welches die jeweilige Gebäudeinstallation steuert, also beispielsweise automatisch eine Lampe an- und ausschaltet oder einen Thermostat eines Heizkörpers einstellt. Die Busgeräte können dabei untereinander und auch mit einem zentralen Konfigurationsgerät über einen Gebäudeinstallationsbus verbunden sein, so dass die Geräte gegenseitig Daten austauschen können und die Busgeräte zentral über das Konfigurationsgerät konfiguriert oder rekonfiguriert werden können. Die unter den Busgeräten ausgetauschten Daten können beispielsweise Sensordaten oder Steuerdaten sein.

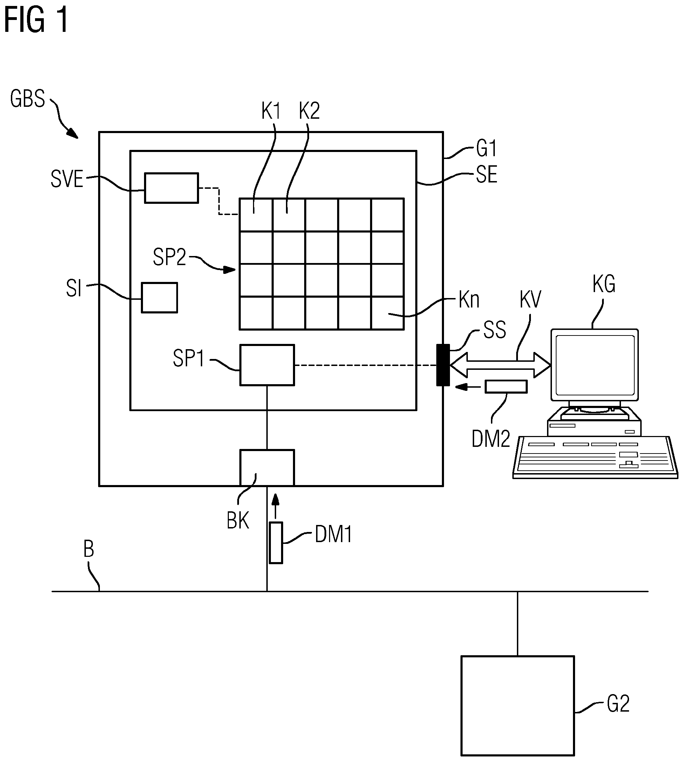

Figur 1 zeigt ein beispielhaftes Busgerät G1 einer busorientierten programmierbaren Elektroinstallation GBS, geeignet zur Durchführung der vorliegenden Erfindung. Das beispielhafte Busgerät G1 ist über einen Bus B (z.B. KNX-Bus) mit einem weiteren Busgerät G2 verbunden. Bei der Darstellung gemäss Figur 1 handelt es sich nur um eine schematische Darstellung, wobei die Grössenproportionen der dargestellten Elemente nicht realitätsgetreu dargestellt sind.

Ein Busgerät G1, G2 weist in der Regel eine zentrale Steuereinheit SE mit einer Prozessoreinrichtung auf, beispielsweise einem Mikrocontroller. Die Steuereinheit SE kann Steuerbefehle für die angeschlossene Gebäudeinstallation GBS erzeugen und/oder Sensordaten von der Gebäudeinstallation GBS auswerten. Um der Steuereinheit SE einen Datenaustausch mit dem Gebäudeinstallationsbus B zu ermöglichen, weist ein Busgerät G1, G2 in der Regel eine spezielle Anschlussschaltung als Busankoppler BK auf. Hierbei kann es sich beispielsweise um einen integrierten Schaltkreis (IC Integrated Circuit) handeln. Die Anschlussschaltung BK umfasst auch die elektrischen Anschlüsse zum Anschließen des Busgeräts G1, G2 an den Gebäudeinstallationsbus B.

Das beispielhafte Busgerät G1 der beispielhaften busorientierten programmierbaren Elektroinstallation GBS umfasst:
- eine Steuereinheit SE mit:
   - einem ersten Speicher SP1 (z.B. ein Cache- oder RAM-Speicher), und
   - einem zweiten Speicher SP2 (z.B. ein Flash-EEPROM), wobei der zweite Speicher SP2 in Speicherbereiche K1, K2, Kn (Seiten) gleicher Grösse aufgeteilt ist, und wobei der erste Speicher SP1 geeignet ist, von einer zu empfangenden, in Grösse der Speicherbereiche K1, K2, Kn (d.h. der Seiten) portionierten Datenmenge DM1,DM2, eine Portion der Datenmenge DM1,DM2 zwischenzuspeichern und diese Portion erst nach vollständigem Erhalt in den zweiten Speicher SP2 zu schreiben; und
- eine zumindest mittelbar mit dem ersten Speicher SP1 verbundene Datenschnittstelle SS, BK. Bei der Datenschnittstelle kann es sich um eine Schnittstelle SS zum Anschluss eines externen Gerätes handeln. In der Darstellung gemäss Figur 1 ist das Busgerät G1 beispielhafterweise mit dem externen Konfigurationsgerät KG (z.B. ein PC mit ETS-Software) über die Schnittstelle SS (z.B. eine USB-Schnittstelle) und einer geeigneten Kommunikationsverbindung KV zum Empfangen der Datenmenge DM2 verbunden. Beim Konfigurationsgerät kann es sich aber auch um ein Busgerät handeln, das über den Installationsbus B und die Busschnittstelle BK des Gerätes G1 eine Datenmenge DM1 an das Busgerät G1 überträgt. Mit Vorteil ist die zu übertragende Datenmenge DM1, DM2 zur Übertragung in mehrere Telegramme aufgeteilt. Der Aufbau eines Telegrammes orientiert sich am jeweiligen zugrundeliegenden Übertragungsmedium (z.B. Twisted Pair oder Power Line bei KNX-Bussystemen). Das Nutzdatenfeld eines Telegrammes enthält mit Vorteil eine oder mehrere Portionen der Datenmenge DM1, DM2. Mit Vorteil entspricht die Grösse einer Portion der Datenmenge DM1, DM2 der Grösse einer Kachel des Flash-Speichers. Mit Vorteil enthält das Nutzdatenfeld eines Telegrammes genau eine Portion einer Datenmenge DM1, DM2. Mit Vorteil enthält das Nutzdatenfeld eines Telegrammes ein ganzzahliges Vielfaches an Portionen einer Datenmenge DM1, DM2.

Die Steuereinheit SE kann als integrierter Schaltkreis (IC) bereitgestellt sein und dabei beispielsweise auch einen Bestandteil eines integrierten Schaltkreises (IC) bilden, welcher auch die Anschlussschaltung BK selbst umfasst. Hierdurch ergibt sich der Vorteil, dass in einer kompakten Bauweise mit einem einzigen Bauteil die Steuereinheit SE und die Anschlussschaltung BK bereitgestellt werden.

Mit Vorteil wird der zweite Speicher SP2 von einer Speicherverwaltungseinheit SVE administriert. Die Speicherverwaltungseinheit SVE kann in die Steuereinheit SE integriert sein und dabei beispielsweise auch einen Bestandteil eines integrierten Schaltkreises (IC) zusammen mit der Steuereinheit SE bilden. Die Speicherverwaltungseinheit SVE verwaltet den Adressraum des zweiten Speichers SP2 und dabei insbesondere die Belegung der Kacheln K1 - Kn des zweiten Speichers SP2. Somit kann über die Speicherverwaltungseinheit SVE festgestellt werden, welche Portionen einer Datenmenge D1, D2 bereits persistent im zweiten Speicher SP2 bei einer Datenübertragung gespeichert wurden.

Aus der Informatik ist bekannt, die Speicherbereiche K1, K2, Kn gleicher Länge des zweiten Speichers SP2 als Kacheln zu bezeichnen. Wenn nun die zu übertragenden Datenmengen D1, D2 (umfassen Daten- und/oder Codesegmente) in Abschnitte (Portionen, Stücke) eben dieser Länge gegliedert bzw. zerlegt werden (diese Abschnitte werden auch Seiten genannt), ergibt sich bei der Wahl einer Zweierpotenz als Kachellänge der Vorteil, dass die Ermittlung einer physikalischen Adresse im zweiten Speichers SP2 durch eine Konkatenation von Kachelnummer und entsprechender Wortnummer (in der Kachel) erfolgen kann. Die Speicherverwaltungseinheit SVE verwaltet dazu eine entsprechende Seiten-Kachel-Tabelle. Mit Vorteil wird für die Kachellänge des Speicherbereichs K1, K2, Kn des zweiten Speichers SP2 eine Zweierpotenz gewählt. Mit Vorteil wird bei der Übertragung die jeweiligen absoluten Adressen übertragen.

Mit Vorteil umfasst das Busgerät G1 eine Statusinformation SI zum Erkennen eines vorliegenden Resets des Busgerätes G1. Die Statusinformation SI in einem geeigneten Speichermedium bzw. Register abgelegt. Bei der Statusinformation SI handelt es sich im Prinzip um ein "Flag", das gesetzt, zurückgesetzt und gelesen werden kann. Damit kann ein Reset zuverlässig erkannt werden. Damit kann ein Upload-Tool (z.B. ein Konfigurationsgerät KV) das eine Datenmenge DM1, DM2 auf das Busgerät G1 überträgt feststellen, ob es sich bei einem vorliegenden Verbindungsabbruch um ein Kommunikationsproblem handelt oder ob das Gerät G1 zurückgesetzt wurde (d.h. durch einen definierten und bewusst ausgelösten Reset).

Bei einem normalen Verbindungsabbruch muss nur die Verbindung neu aufgebaut werden und die noch nicht im zweiten Speicher SP2 persistent hinterlegten Datentelegramme (bzw. Datenportionen) einer zu übertragenden Datenmenge DM1, DM2 neu gesendet werden. Bei einem Reset dagegen, wird die gesamte zu übertragende Datenmenge D1, D2 neu übertragen. Mit Vorteil wird im Falle einer verbindungslosen Übertragung (Point-to-Point, Connectionless Communication Mode nach KNX Standard) nach jedem übertragenem Block der Resettest durchgeführt.

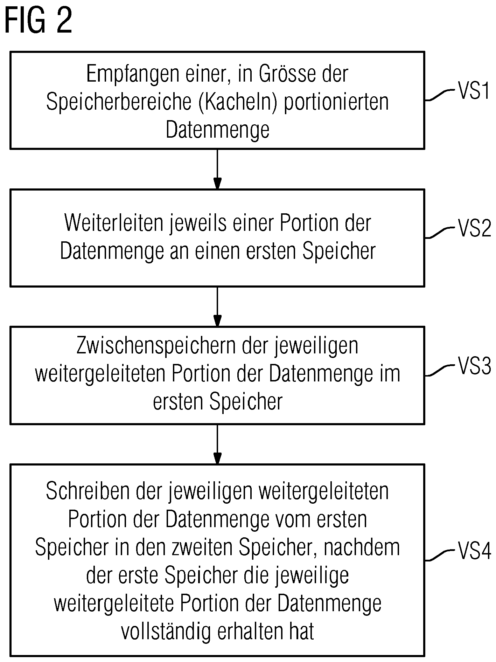

Figur 2 zeigt ein beispielhaftes Ablaufdiagramm für ein Verfahren zum Übertragen von Daten auf ein Busgerät (Busteilnehmer; z.B. Aktor oder Sensor) einer busorientierten programmierbaren Elektroinstallation (GBS), wobei das Busgerät eine Steuereinheit (z.B. ein Mikrokontroller) mit einem ersten Speicher (z.B. RAM-Speicher oder Cacheregister) und einem zweiten Speicher (z.B. Flash-Speicher) umfasst, wobei der zweite Speicher in Speicherbereiche (Kacheln) gleicher Grösse aufgeteilt ist, das Verfahren umfassend die folgenden Schritte:
(VS1) Empfangen einer, in Grösse der Speicherbereiche portionierten Datenmenge (umfassend Daten- oder Codesegmente), durch eine zumindest mittelbar mit dem ersten Speicher verbundene Datenschnittstelle (z.B. Busschnittstelle oder USB- oder IP-Schnittstelle);
(VS2) Weiterleiten jeweils einer Portion der Datenmenge an den ersten Speicher;
(VS3) Zwischenspeichern der jeweiligen weitergeleiteten Portion der Datenmenge im ersten Speicher;
(VS4) Schreiben der jeweiligen weitergeleiteten Portion der Datenmenge vom ersten Speicher in den zweiten Speicher, nachdem der erste Speicher die jeweilige weitergeleitete Portion der Datenmenge vollständig erhalten hat. Das Verfahren ermöglicht u.a. eine zuverlässige Übertragung von Applikations- bzw. Betriebssystem-Updates auf das Busgerät. Mit Vorteil wird die Datenmenge in entsprechenden Telegrammen übertragen, je nach zugrundliegendem Übertragungsmedium.

Mit Vorteil wird die Belegung des zweiten Speichers durch eine Speicherverwaltungseinheit verwaltet. Mit Vorteil durch Seiten-Kacheln-Tabellen zur Verwaltung der Speicherbelegung. Dadurch ist es möglich zu bestimmen, welche Datenportionen (Datentelegramme) einer zu übertragenden Datenmenge bereits im Speicher persistiert wurden.

Mit Vorteil wird vor dem Übertragen der Datenmenge (z.B. Applikations-Update oder Betriebssystem-Update) durch ein Konfigurationsgerät (z.B. entsprechend ausgerüsteter PC mit ETS-Software) eine im Busgerät befindliche Statusinformation zum Erkennen eines vorliegenden Resets abgefragt. Dadurch kann zuverlässig bestimmt werden, ob ein Verbindungsabbruch durch ein Kommunikationsproblem oder ein Zurücksetzen (Reset) des Busgerätes erfolgte.

Bei den zu übertragenden Daten kann es sich z.B. um Applikationen (mit entsprechender Proketierung) oder um Betriebssoftware (Firmware-Update) für das Busgerät handeln.

Das Verfahren gemäss Ablaufdiagramm aus Figur 2 ist insbesondere mit einem Busgerät G1 und mit einem Konfigurationsgerät KG (z.B. ETS), wie in Figur 1 beschrieben, durchführbar.

Die vorliegende Erfindung hat insbesondere folgende Vorteile:
- Durch die Aufteilung der zu übertragenden Datenmenge in Bereiche, die sich an den Flashpages orientiert, muss nicht mehr die gesamte Datenmenge neu geladen werden, wenn zu einem Kommunikationsproblem kommt.
- Durch Ablegen einer Information in Gerät, die bei einem Reset zurückgesetzt wird, kann ein Reset zuverlässig erkannt werden.
- Die übertragenen Daten werden z.B. im RAM zwischengespeichert bis eine komplette Page bzw. Kachel im Flash persistiert wird. Bei einem Verbindungsabbruch ist die Verbindung (Point-to-Point, Connection-Oriented Communication Mode) durch einen Kommunikationsfehler unterbrochen und kann neu aufgebaut werden. Die Daten sind dann noch im RAM vorhanden und der Upload kann fortgesetzt werden. Bei einem Reset sind die Daten im RAM verloren und man muss alle Daten, die noch nicht geflashed d.h. persistiert wurden, wieder übertragen werden.

Verfahren zum zuverlässigen Übertragen von Daten auf ein Busgerät (Busteilnehmer) einer busorientierten programmierbaren Elektroinstallation, wobei das Busgerät (z.B. Aktor oder Sensor) eine Steuereinheit (Mikrokontroller) mit einem ersten Speicher (z.B. RAM) und einem zweiten Speicher umfasst, wobei der zweite Speicher (z.B. Flash-Speicher zur persistenten Speicherung von Daten- oder Codesegmenten) in Speicherbereiche (Kacheln) gleicher Grösse aufgeteilt ist, das Verfahren umfassend die folgenden Schritte:
- Empfangen einer, in Grösse der Speicherbereiche (Kacheln) portionierten Datenmenge, durch eine zumindest mittelbar mit dem ersten Speicher verbundene Datenschnittstelle (Busschnittstelle oder externe Schnittstelle);
- Weiterleiten jeweils einer Portion der Datenmenge an den ersten Speicher;
- Zwischenspeichern der jeweiligen weitergeleiteten Portion der Datenmenge im ersten Speicher; und
- Schreiben der jeweiligen weitergeleiteten Portion der Datenmenge vom ersten Speicher in den zweiten Speicher, nachdem der erste Speicher die jeweilige weitergeleitete Portion der Datenmenge vollständig erhalten hat. Das Verfahren umfasst weiterhin einen Mechanismus zum zuverlässigen Erkennen, ob ein erfolgter Verbindungsabbruch durch ein Kommunikationsproblem oder durch einen Reset des Busgerätes (Busteilnehmers) erfolgte.

## Patentansprüche

1. Verfahren zum Übertragen von Daten auf ein Busgerät (G1, G2) einer busorientierten programmierbaren Elektroinstallation (GBS), wobei das Busgerät (G1, G2) mindestens eine Steuereinheit (SE) mit einem ersten Speicher (SP1) und einem zweiten Speicher (SP2) umfasst, wobei der zweite Speicher (SP2) in Speicherbereiche (K1, K2, Kn) gleicher Grösse aufgeteilt ist, das Verfahren umfassend die folgenden Schritte:
(VS1) Empfangen einer, in Grösse der Speicherbereiche (K1, K2, Kn) portionierten Datenmenge (DM1, DM2), durch eine zumindest mittelbar mit dem ersten Speicher (SP1) verbundene Datenschnittstelle (SS, BK);
(VS2) Weiterleiten jeweils einer Portion der Datenmenge (DM1, DM2) an den ersten Speicher (SP1);
(VS3) Zwischenspeichern der jeweiligen weitergeleiteten Portion der Datenmenge (DM1, DM2) im ersten Speicher (SP1);
(VS4) Schreiben der jeweiligen weitergeleiteten Portion der Datenmenge (DM1, DM2) vom ersten Speicher (SP1) in den zweiten Speicher (SP2), nachdem der erste Speicher (SP1) die jeweilige weitergeleitete Portion der Datenmenge (DM1, DM2) vollständig erhalten hat,
wobei die Belegung des zweiten Speichers (SP2) durch eine Speicherverwaltungseinheit (SVE) verwaltet wird,
wobei die Speicherverwaltungseinheit (SVE) die vom ersten Speicher (SP1) erhaltenen und in den zweiten Speicher (SP2) geschriebenen Portionen einer Datenmenge verwaltet, ist sichergestellt, dass bei einem Verbindungsabbruch bei der Übertragung der Datenmenge nur diejenigen Portionen der Datenmenge, die noch nicht in den zweiten Speicher (SP2) geschriebenen wurden, neu übertragen werden müssen.

2. Verfahren nach einem der vorstehenden Ansprüche, wobei vor dem Übertragen der Datenmenge (DM1, DM2) durch ein Konfigurationsgerät (KG) eine im Busgerät (G1, G2) befindliche Statusinformation (SI) zum Erkennen eines vorliegenden Resets abgefragt wird.

3. Verfahren nach einem der vorstehenden Ansprüche , wobei es sich bei den zu übertragenden Daten (DM1, DM2) um Applikationen oder um Betriebssoftware (Firmware-Update) für das Busgerät (G1, G2) handelt.

4. Computerprogramm zur Übertragung von Daten (DM1, DM2), insbesondere Applikationen, auf ein Busgerät (G1, G2) einer busorientierten programmierbaren Elektroinstallation (GBS) mit Instruktionen zur Ausführung des Verfahrens nach einem der Patentansprüche 1 bis 3.

5. Computerlesbares Medium, das auf einem Computer ausführbare Befehle aufweist zur Übertragung von Daten (DM1, DM2), insbesondere Applikationen, gemäss eines Verfahren nach einem der Patentansprüche 1 bis 3 für ein Busgerät (G1, G2) einer busorientierten programmierbaren Elektroinstallation (GBS).

6. Busgerät (G1, G2) einer busorientierten programmierbaren Elektroinstallation (GBS), wobei das Busgerät (G1, G2) umfasst:
eine Steuereinheit (SE) mit:
einem ersten Speicher (SP1), und
einem zweiten Speicher (SP2), wobei der
zweite Speicher (SP2) in Speicherbereiche (K1, K2, Kn) gleicher Grösse aufgeteilt ist, und wobei der erste Speicher (SP1) geeignet ist, von einer zu empfangenden, in Grösse der Speicherbereiche (K1, K2, Kn) portionierten Datenmenge (DM1, DM2), eine Portion der Datenmenge (DM1, DM2) zwischenzuspeichern und diese Portion erst nach vollständigem Erhalt in den zweiten Speicher (SP2) zu schreiben;
eine zumindest mittelbar mit dem ersten Speicher (SP1) verbundene Datenschnittstelle (SS, BK),
wobei der zweite Speicher (SP2) von einer Speicherverwaltungseinheit (SVE) administriert wird,
wobei die Speicherverwaltungseinheit (SVE) die vom ersten Speicher (SP1) erhaltenen und in den zweiten Speicher (SP2) geschriebenen Portionen einer Datenmenge verwaltet, ist sichergestellt, dass bei einem Verbindungsabbruch bei der Übertragung der Datenmenge nur diejenigen Portionen der Datenmenge, die noch nicht in den zweiten Speicher (SP2) geschriebenen wurden, neu übertragen werden müssen.

7. Busgerät (G1, G2) nach Anspruch 6, weiter umfassend eine Statusinformation (SI) in einem geeigneten Speichermedium, zum Erkennen eines Resets.

8. Busgerät (G1, G2) nach einem der Ansprüche 6 bis 7, wobei die Datenschnittstelle (SS, BK) dazu ausgebildet ist, die portionierte Datenmenge (DM1, DM2) von einem Konfigurationsgerät (KG) zu erhalten.

## Claims

1. Method for transmitting data to a bus device (G1, G2) of a bus-oriented programmable electrical installation (GBS), wherein the bus device (G1, G2) comprises at least one control unit (SE) with a first memory (SP1) and a second memory (SP2), wherein the second memory (SP2) is divided into memory areas (K1, K2, Kn) of the same size, the method comprising the following steps:
(VS1) receipt of a data volume (DM1, DM2), portioned into the size of the memory areas (K1, K2, Kn), by a data interface (SS, BK) connected at least indirectly to the first memory (SP1) ;
(VS2) forwarding in each case of a portion of the data volume (DM1, DM2) to the first memory (SP1);
(VS3) temporary storage of the respective forwarded portion of the data volume (DM1, DM2) in the first memory (SP1) ;
(VS4) writing of the respective forwarded portion of the data volume (DM1, DM2) from the first memory (SP1) into the second memory (SP2) after the first memory (SP1) has received the respective forwarded portion of the data volume (DM1, DM2) in full,
wherein the occupancy of the second memory (SP2) is managed by a memory management unit (SVE),
wherein the memory management unit (SVE) manages the portions of a data volume received from the first memory (SP1) and written to the second memory (SP2), it is ensured that in the event of a connection being lost during the transmission of the data volume only those portions of the data volume that have not yet been written to the second memory (SP2) need be retransmitted.

2. Method according to one of the preceding claims, wherein prior to the transmission of the data volume (DM1, DM2) by a configuration device (KG), status information (SI) located in the bus device (G1, G2) is queried in order to detect the presence of a reset.

3. Method according to one of the preceding claims, wherein the data to be transmitted (DM1, DM2) is applications or operating software (firmware update) for the bus device (G1, G2) .

4. Computer program for the transmission of data (DM1, DM2), in particular applications, to a bus device (G1, G2) of a bus-oriented programmable electrical installation (GBS) with instructions for executing the method according to one of the claims 1 to 3.

5. Computer-readable medium which has commands that can be executed on a computer for the transmission of data (DM1, DM2), in particular applications, in accordance with a method according to one of the claims 1 to 3 for a bus device (G1, G2) of a bus-oriented programmable electrical installation (GBS) .

6. Bus device (G1, G2) of a bus-oriented programmable electrical installation (GBS), wherein the bus device (G1, G2) comprises:
a control unit (SE) having:
a first memory (SP1), and
a second memory (SP2), wherein
the second memory (SP2) is divided into memory areas (K1, K2, Kn) of the same size, and wherein the first memory (SP1) is suitable for temporarily storing a portion of the data volume (DM1, DM2) from a data volume (DM1, DM2) that is to be received and portioned into the size of the memory areas (K1, K2, Kn) and to write said portion to the second memory (SP2) only after receipt in full;
a data interface (SS, BK) connected at least indirectly to the first memory (SP1),
wherein the second memory (SP2) is administered by a memory management unit (SVE),
wherein the memory management unit (SVE) manages the portions of a data volume received from the first memory (SP1) and written to the second memory (SP2), it is ensured that in the event of a connection being lost during the transmission of the data volume only those portions of the data volume that have not yet been written to the second memory (SP2) need be retransmitted.

7. Bus device (G1, G2) according to claim 6, further comprising status information (SI) in a suitable storage medium for detecting a reset.

8. Bus device (G1, G2) according to one of claims 6 to 7, wherein the data interface (SS, BK) is designed to receive the portioned data volume (DM1, DM2) from a configuration device (KG) .

## Revendications

1. Procédé de transmission de données à un appareil bus (G1, G2) d'une installation électrique (GBS) programmable orientée bus, l'appareil bus (G1, G2) comprenant au moins une unité de commande (SE) avec une première mémoire (SP1) et une deuxième mémoire (SP2), la deuxième mémoire (SP2) étant partitionnée en zones de mémoire (K1, K2, Kn) de même taille, le procédé comprenant les étapes suivantes :
(VS1) réception d'une quantité de données (DM1, DM2) proportionnée à la taille des zones de mémoire (K1, K2, Kn) par une interface de données (SS, BK) reliée au moins indirectement à la première mémoire (SP1) ;
(VS2) retransmission de respectivement une portion de la quantité de données (DM1, DM2) à la première mémoire (SP1) ;
(VS3) mise en mémoire tampon, dans la première mémoire (SP1), de la portion de la quantité de données (DM1, DM2) retransmise respective ;
(VS4) écriture de la portion de la quantité de données (DM1, DM2) retransmise respective de la première mémoire (SP1) dans la deuxième mémoire (SP2) après que la première mémoire (SP1) a entièrement reçu la portion de la quantité de données (DM1, DM2) retransmise respective,
l'occupation de la deuxième mémoire (SP2) étant gérée par une unité de gestion de mémoire (SVE),
l'unité de gestion de mémoire (SVE) gérant les portions d'une quantité de données reçues de la première mémoire (SP1) et écrites dans la deuxième mémoire (SP2), ceci assurant que, en cas de déconnexion lors de la transmission de la quantité de données, seules doivent être de nouveau transmises les portions de la quantité de données qui n'ont pas encore été écrites dans la deuxième mémoire (SP2).

2. Procédé selon l'une des revendications précédentes, dans lequel une information de statut (SI) située dans l'appareil bus (G1, G2) est, avant la transmission de la quantité de données (DM1, DM2), interrogée par un appareil de configuration (KG) pour identifier la présence d'une réinitialisation.

3. Procédé selon l'une des revendications précédentes, dans lequel les données à transmettre (DM1, DM2) sont des applications ou un logiciel d'exploitation (mise à jour de micrologiciel) pour l'appareil bus (G1, G2).

4. Programme informatique pour la transmission de données (DM1, DM2), et plus particulièrement d'applications, à un appareil bus (G1, G2) d'une installation électrique (GBS) programmable orientée bus avec des instructions pour exécuter le procédé selon l'une des revendications 1 à 3.

5. Support lisible par ordinateur, qui comporte des commandes exécutables sur un ordinateur pour la transmission de données (DM1, DM2), et plus particulièrement d'applications, selon un procédé selon l'une des revendications 1 à 3 pour un appareil bus (G1, G2) d'une installation électrique (GBS) programmable orientée bus.

6. Appareil bus (G1, G2) d'une installation électrique (GBS) programmable orientée bus, l'appareil bus (G1, G2) comprenant :
une unité de commande (SE) avec :
une première mémoire (SP1)
et une deuxième mémoire (SP2), la deuxième mémoire (SP2) étant partitionnée en zones de mémoire (K1, K2, Kn) de même taille et la première mémoire (SP1) étant adaptée pour, étant donné une quantité de données (DM1, DM2) à recevoir, portionnée à la taille des zones de mémoire (K1, K2, Kn), mettre en mémoire tampon une portion de la quantité de données (DM1, DM2) et écrire cette portion seulement après réception complète dans la deuxième mémoire (SP2) ;
une interface de données (SS, BK) reliée au moins indirectement à la première mémoire (SP1),
la deuxième mémoire (SP2) étant administrée par une unité de gestion de mémoire (SVE),
l'unité de gestion de mémoire (SVE) gérant les portions d'une quantité de données reçues de la première mémoire (SP1) et écrites dans la deuxième mémoire (SP2), ceci assurant que, en cas de déconnexion lors de la transmission de la quantité de données, seules doivent être de nouveau transmises les portions de la quantité de données qui n'ont pas encore été écrites dans la deuxième mémoire (SP2).

7. Appareil bus (G1, G2) selon la revendication 6, comprenant en outre une information de statut (SI), sur un support de mémoire approprié, pour identifier une réinitialisation.

8. Appareil bus (G1, G2) selon l'une des revendications 6 à 7, dans lequel l'interface de données (SS, BK) est conçue pour recevoir la quantité de données portionnée (DM1, DM2) d'un appareil de configuration (KG).
